# EUROPÄISCHE PATENTSCHRIFT

(11) **EP 2 195 869 B1**
(45) Veröffentlichungstag und Bekanntmachung des Hinweises auf die Patenterteilung: **26.10.2011**
(21) Anmeldenummer: 08804805.3
(22) Anmeldetag: 26.09.2008
(51) Int. Cl.: H01M 8/02, H01M 8/24

(54) **BRENNSTOFFZELLEN-ANLAGE UND VERFAHREN ZU DEREN HERSTELLUNG**
FUEL CELL SYSTEM AND METHOD FOR PRODUCTION THEREOF
SYSTÈME DE PILES À COMBUSTIBLE ET SON PROCÉDÉ DE FABRICATION

(30) Priorität: 28.09.2007 DE 102007046977
(43) Veröffentlichungstag der Anmeldung: 16.06.2010
(73) Patentinhaber: Siemens Energy, Inc., Orlando, FL 32826-2399 (US)
(72) Erfinder: BECKER, Ines, 90408 Nürnberg (DE); BITTNER, Erich, 91792 Ellingen (DE); GILLETT, James E., Greensburg PA 15601 (US); KLEINLEIN, Wilhelm, 90765 Fürth (DE); ZAFRED, Paolo R., Murrysville Pennsylvania 15668 (US)
(74) Vertreter: Maier, Daniel Oliver
(86) Internationale Anmeldenummer: PCT/EP2008/062928
(87) Internationale Veröffentlichungsnummer: WO 2009/043819

(56) Entgegenhaltungen:
- WO-A-01/39311
- WO-A-02/21621
- WO-A-2005/117192
- WO-A-2006/017777
- DE-A1-102004 047 761

## Beschreibung

Die Erfindung bezieht sich auf eine Brennstoffzellen-Anlage aus Hochtemperatur-Brennstoffzellen mit festkeramischem Elektrolyten (SOFC) gemäß dem Oberbegriff des Patentanspruches 1. Daneben bezieht sich die Erfindung auch auf ein Verfahren zu deren Herstellung.

In der älteren internationalen Patentanmeldung WO 2005/117192 A1 werden Brennstoffzellen und Anlagen aus solchen Brennstoffzellen beschrieben, die Gebrauch vom so genannten HPD(High Power Density)-Prinzip machen, bei dem mehrere rohrförmige Zellen eine Einheit bilden, wobei die einzelnen Zellen speziell als so genannte Triangel- oder Delta(Δ)-Zellen ausgebildet sind. Es wurde gefunden, dass die Leistungsausbeute bei solchen Δ-Zellen, insbesondere bei sog. Δ8- oder Δ9-Zellen, d.h. HPD-Zellen mit acht oder neun Kanälen, signifikant verbessert ist.

Bei diesen Brennstoffzellen besteht ein Problem darin, die einzelnen HPD-Elemente miteinander elektrisch zu verbinden, wobei gleichermaßen die Verbindung so flexibel sein muss, dass die Gesamtanordnung Wechselbeanspruchungen aushalten kann. Hierbei handelt es sich größtenteils um thermische Spannungen, die durch unterschiedliche Ausdehnungskoeffizienten der einzelnen Komponenten verursacht werden und hauptsächlich beim Aufheizen und Abkühlen auftreten. Im Allgemeinen bestehen dafür verwendete Kontaktierungen aus flachen Nickel-Bauteilen, wie Filze oder Schäume, wobei diese insbesondere in der Ausbildung als Geflechtmatten eine gewisse Elastizität aufweisen.

Ebene Verbindungen zweier Brennstoffzellen basierend auf Nickel-Filzen sind vom Stand der Technik bekannt, wobei im Einzelnen auf die Veröffentlichung "Fuel Cell Systems: Towards Commerzialition" in "Power Journal 2001", pp. 10-13 verwiesen wird.

In den vorveröffentlichten Dokumenten DE 10 2004 047 761 A1, WO 2006/017777 A2, WO 02/21621 A2 und US 2005/0208363 A1 werden jeweils Elemente zur Verwendung bei der Kontaktierung von tubularen Brennstoffzellen beschrieben. Dabei geht es darum, entweder aus Metallgewirken mattenartige Elemente zu formen, welche die Kontakte zwischen zwei Brennstoffzellenröhren bilden, oder aber auch aus gestanzten Blechen bzw. aus Streckmetallen solche dreidimensionale Strukturen zu bilden, die an die Form der tubularen Brennstoffzellen angepasst sind. Insbesondere bei letzteren räumlich gebogenen Strukturen ist dabei in Längsrichtung der Elemente keine hinreichende Elastizität gewährleistet. Für Δ-Zellen sind diese Strukturen ungeeignet.

Ausgehend vom Stand der Technik ist es Aufgabe der Erfindung, eine Vereinfachung und Verbesserung von elektrischen Kontaktierungen für SOFC-Brennstoffzellen-Anlagen zu schaffen.

Die Aufgabe ist erfindungsgemäß durch die Gesamtheit der Merkmale des Patentanspruches 1 gelöst. Ein spezifisches Herstellungsverfahren zum Aufbau der erfindungsgemäßen Brennstoffzellenanlage ist Gegenstand von Anspruch 23. Weiterbildungen der Erfindung sind in den jeweiligen Unteransprüchen angegeben.

Gegenstand der Erfindung ist eine Hochtemperatur-Brennstoffzellenanlage mit sog. HPD-Brennstoffzellen, bei der die einzelnen Zellen als so genannte Delta(Δ)-Brennstoffzellen aufgebaut sind, welche durch Hohlschnüre als flexible Kontaktanordnungen miteinander verbunden sind und zwar derart, dass jede Hohlschnur wenigstens drei Kontaktflächen zu jeweils zwei benachbarten HPD-Brennstoffzellen hat. Der Begriff "Hohlschnur" ist dabei ein in der einschlägigen Technik bekannter Terminus für jeweils ein Innenlumen einschließende flexible Kontaktelemente und umfasst sowohl zu Rundschläuchen gewirkte Drahtgestricke als auch Drahtspiralen. Diese Ausführungsformen können auch in besonders vorteilhafter Weise miteinander kombiniert werden. Derartige Hohlschnüre als Kontaktelemente können einen kreisrunden Querschnitt oder einen Dreiecksbasisquerschnitt mit abgerundeten Ecken aufweisen.

Bei der Erfindung sorgt der durch die Hohlschnüre bewirkte elektrische Kontakt für gleichförmige, axiale elektrische Kontaktierungen zwischen der Zellanode und dem so genannten Interkonnektor einer SOFC-Brennstoffzelle, womit Spannungsverluste als Ergebnis des ohmschen Widerstandes so weit wie möglich vermieden werden. Dabei wird als weitere Funktion gleichermaßen eine hinreichende elastische Flexibilität erreicht, so dass mechanische Beanspruchungen im Dauerbetrieb von Brennstoffzellen-Anlagen weitgehend kompensiert werden.

Besonders vorteilhaft ist, dass die erfindungsgemäße Brennstoffzellenanlage Vibrationen während Transport und Handling auffangen kann, weil durch die spezifischen Kontaktierungsmittel für eine Dämpfung gesorgt ist. Darüber hinaus ist bei Bedarf auch eine leichte zerstörungsfreie Demontage, insbesondere für Reparaturzwecke der Brennstoffzellenbündel, möglich.

Das Material für die erfindungsgemäßen Hohlschnüre besteht in an sich bekannter Weise aus Nickel (Ni) bzw. Legierungen auf Nickelbasis. Gegebenenfalls kommt aber auch Kupfer (Cu) für den gleichen Anwendungszweck in Frage, sofern die Brennstoffzellen diesbezüglich konzipiert sind, insbesondere für niedrigere Einsatztemperaturen. Auch Legierungen aus Nickel und Kupfer sind möglich. Wesentlich ist, dass die elektrische Leitfähigkeit > 10⁵ S/m ist.

Weitere Einzelheiten und Vorteile der Erfindung ergeben sich aus der nachfolgenden Figurenbeschreibung von Ausführungsbeispielen in Verbindung mit den Patentansprüchen.

Es zeigen jeweils in schematischer Darstellung
- Figur 1: einen Ausschnitt aus einem Stapel ("Stack") mit mehreren SOFC-HPD-Brennstoffzellen,
- Figur 2: die Anordnung von Figur 1 im zusammengepressten und gesinterten Zustand,
- Figur 3: eine Vergrößerung aus Figur 1 mit Verdeutlichung der zugehörigen Kontaktpunkte und erster Ausbildung der weiteren Kontaktmittel,
- Figur 4: eine Vergrößerung aus Figur 2 mit Verdeutlichung der zugehörigen Kontaktpunkte und zweiter Ausbildung der weiteren Kontaktmittel,
- Figur 5 und Figur 6: zwei Varianten von Metallgestricken in der Draufsicht,
- Figur 7: den Verlauf des Strompfades bei HPD-Brennstoffzellenanordnungen des Standes der Technik,
- Figur 8a und 8b: den Verlauf des Strompfades bei den neuen Zellverbindern,
- Figur 9: eine Hohlschnurkontaktierung von Δ-Zellen aus einem Gestrick mit darüber liegender Spiralfeder im Querschnitt und
- Figur 10: die Hohlschnurkontaktierung gemäß Figur 9 in perspektivischer Darstellung.

Die Figuren werden weitestgehend gemeinsam beschrieben. Gleich- bzw. gleichwirkende Teile haben gleiche bzw. sich entsprechende Bezugszeichen.

Nachfolgend werden jeweils HPD-Brennstoffzellen aus acht Elementen verwendet, die jeweils Δ- oder triangelförmig ausgebildet sind und für die nachfolgend der Terminus "Δ8-Zelle" verwendet wird. Aber auch weniger oder mehr einzelne Elemente, insbesondere als "Δ13-Zelle", sind möglich.

Die Δ8-Zellen werden in einem kontinuierlichen Herstellungsprozess durch Extrusion, Strangpressen oder dergleichen aus den vorgegebenen Rohmaterialien hergestellt. Solche Herstellungstechnologien sind vom Stand der Technik bekannt, wozu beispielsweise auf die oben genannte Veröffentlichung aus "Power Generation" verwiesen wird.

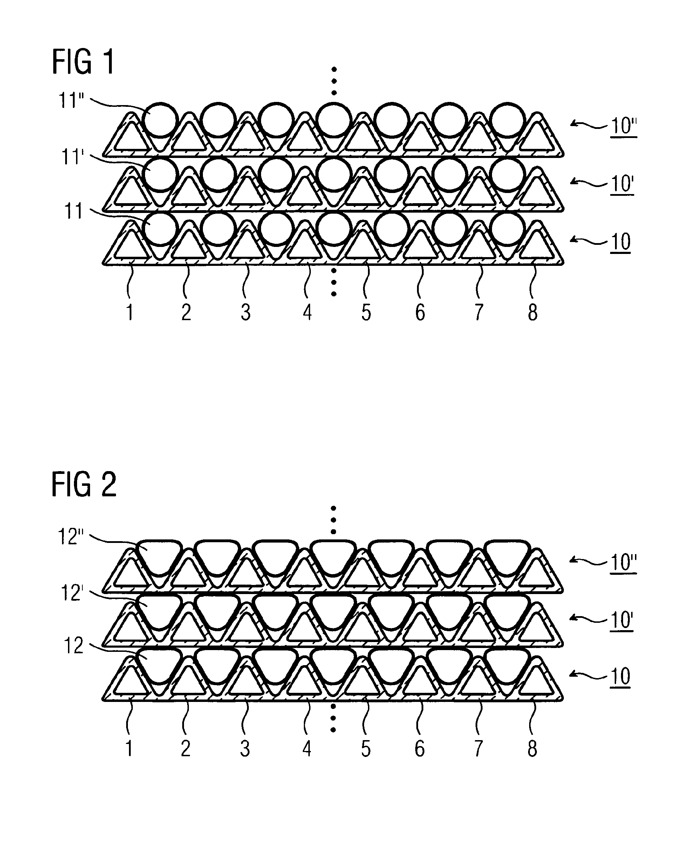

In den Figuren 1 und 2 bilden acht Δ-Kanäle 1 bis 8 jeweils eine Brennstoffzelle 10, die als Delta-Zelle bezeichnet wird. Zum Aufbau solcher Zellen aus Kathode, Elektrolyt und Anode, die als Funktionsschichten auf einem kathodischen Sinterkörper aufgebracht sind, wird auf den einschlägigen Stand der Technik verwiesen. Beim Stand der Technik, beispielsweise entsprechend der WO 2005/117192 A1, sind bekannte Delta-Zellen zu einem Bündel, (so genanntes "Bundle"), beispielsweise 3 Delta-Zellen 10, 10' und 10", verbunden und kontaktiert. Die Kontaktierung zur oberhalb liegenden Zelle ist nicht eingezeichnet. Zur bestimmungsgemäßen Funktion im kompletten Bündel müssen die einzelnen Delta-Zellen 10, 10', 10" elektrisch miteinander kontaktiert werden, wozu jeweils zusätzliche Kontakt-Anordnungen zwischen der Anode und dem bei SOFC-Brennstoffzellen üblicherweise vorhandenen Interkonnektor verwendet werden. Nebenbedingung ist dabei, dass die elektrische Kontaktierung einschließlich der formschlüssigen Verbindung dergestalt erfolgt, dass während eines Langzeitbetriebes der Brennstoffzellen-Anlage bei wechselnden Temperaturen mechanische Wechselkräfte ("Vibrationen") aufgenommen werden können.

In der Figur 1 sind dafür jeweils in die Δ-Formen einzelne zu Federn geformte Nickeldrähte als Hohlschnüre 11, 11', 11" , ... eingefügt, die als elektrische Kontaktierungen dienen. Unter dem Terminus "Hohlschnur" wird dabei beispielsweise ein Rundschlauch aus einem Gestrick aus metallischen Drähten verstanden, das ein freies Innenlumen und eine vorgegebene Wandstärke aufweist, wobei das Gestrick aus Drähten vorgegebenen Durchmessers automatisiert gefertigt wird. Aber auch Drahtspiralen aus Drähten vorgegebenen Durchmessers fallen unter diesen Terminus.

Wesentlich ist bei einer solchen Hohlschnur, dass einerseits hinreichende mechanische Eigenschaften, insbesondere hinsichtlich Elastizität, realisiert sind und andererseits gute elektrische Eigenschaften gewährleistet sind. Weiterhin muss das innere Lumen zur Brenngasförderung geeignet sein, weshalb dazu insbesondere eine gasdurchlässige Wandung der Hohlschnur von Vorteil ist.

In Figur 1 sind die Drahtgebilde 11, 11', ... über die gesamte axiale Länge der HPD-Zellen in den Tälern der Δ-Kanäle 1, 2, ... angeordnet. Zur Befestigung der Hohlschnüre 11, 11', ... an den zugehörigen Interkonnektoren, die aus der Figur 1 nicht im Einzelnen ersichtlich sind, können kontaktherstellende Elemente auf Nickel- oder Kupferbasis verwendet werden. Möglich sind auch metallhaltige Pasten.

Zur praktischen Ausführung werden zur Kontaktierung der Nickeldrähte mit der Anode oder dem Interkonnektormaterial Gewichte auf das Bündel aufgelegt, so dass während einer Sinterung eine Vorspannung vorliegt.

Das Ergebnis letzterer Behandlung ist in Figur 2 dargestellt. Aus den Runddrähten bzw. Röhren ergeben sich dabei Anordnungen mit im Wesentlichen dreieckförmiger Grundstruktur mit abgerundeten Ecken, die sich in die Δ-Kanäle exakt einpassen. Dabei sind jeweils drei Kontaktstellen zwischen der Anodenoberfläche einerseits und dem Interkonnektor andererseits gebildet.

Neben dem kreisförmigen Durchmesser ist auch eine dreieckförmige Querschnittsgeometrie möglich, was in Figur 2 mit den Hohlschnüren 12, 12', ... verdeutlicht ist. Dabei kann eine Vorverformung durchgeführt werden, so dass sich die Hohlschnüre 12, 12', ... beim Stackaufbau "verdrücken" lassen können.

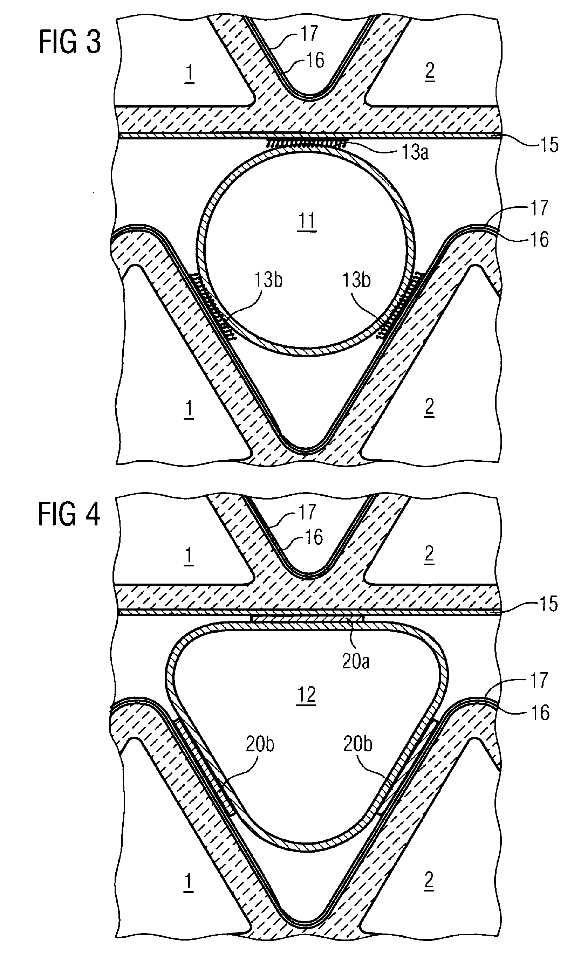

Die Kontaktierung der Hohlschnüre 11 bzw. 12 wird anhand der Figuren 3 und 4 für eine einzelne Δ-Zelle verdeutlicht. Ersichtlich ist, dass im Schnittbild gemäß Fig. 3 die runde Hohlschnur 11 an zwei Bereichen der Flanken der Δ-Zellen 1, 2 der ersten Lage 10 aufliegt und an einem Bereich an der Δ-Zelle der nächsten Lage 10', wobei sich dazwischen der Interkonnektor 15 der nächsten Lage 10' befindet. Im Schnittbild gemäß Fig. 4 liegt dagegen die dreieckförmige Hohlschnur 11 an zwei streifenförmigen Bereichen der Flanken der Δ-Zellen auf und an einem Bereich auf der Δ-Zelle der nächsten Lage 10' .

Bei den Figuren 3 und 4 kann an den Kontaktstellen der Nickelrundschnur zur Anodenoberfläche einerseits und zur Interkonnektor-Fläche andererseits in bekannter Weise als kontaktherstellende Elemente jeweils leitfähiges Epoxidharz eingesetzt werden. Vorteilhaft ist insbesondere die Verwendung von metallischen Klebebändern, insbesondere doppelseitig klebender Nickel-Bänder, was anhand Figur 4 im Einzelnen verdeutlicht wird. In diesem Zusammenhang wird weiterhin auf die parallele deutsche Patentanmeldung der Anmelderin mit gleichem Zeitrang und der Bezeichnung "Hilfsmittel zur elektrischen Kontaktierung von Hochtemperatur-Brennstoffzellen und Verfahren zu dessen Herstellung" verwiesen.

In Figur 4 sind derartige Klebebänder 20a, 20b, 20c zur Fixierung der Hohlschnur 12 mit dreieckförmigem Querschnitt eingesetzt. Mit dieser Hohlschnur 12 ergibt sich mit den streifenförmigen Metallbändern die oben bereits erwähnte flächenhafte Kontaktierung.

Von Letzterem abgesehen können auch entsprechend Figur 3 so genannte Velcro-Bänder 13a, 13b, 13c eingesetzt werden, die nach Art eines Klettverschlusses freie Haken aufweisen, beispielsweise eine Breite von 2 bis 15 mm haben. Eine solche Vorfixierung erleichtert ebenfalls den Herstellungsvorgang bei einer industrietauglichen Massenproduktion der Brennstoffzellen.

Die erfolgreiche Anwendung der Erfindung unter Einsatz des doppelseitigen Klebebandes als Verbindung zwischen Zellverbinder und Zelle hat gezeigt, dass die Kontaktstellen nach Aufbringen einer hohen Temperatur feste Verbindungen mit guter elektrischer Kontaktierung ausbilden. Dabei fungieren die Hohlschnüre als flexible und elastische Elemente auch als sog. Vibrations-Isolierung, da sie mechanische Kräfte aufnehmen können.

Widerstandsmessungen beim ersten Aufheizen des Bündels der Hohlschnüre haben gezeigt, dass der Gesamtwiderstand mit zunehmender Temperatur abnimmt. Es wird eine dauerhafte Verbindung zwischen Hohlschnur und Zelloberfläche ausgebildet. Diese Tatsache kann für das Sintern der Bündel während des ersten Aufheizens des Generators ausgenützt werden (sog "in situ sintering"). Außerdem kann durch den Gebrauch bzw. Einsatz des doppelseitigen Nickel-Klebebandes die Festigkeit der gesinterten Verbindung dahingehend eingestellt werden, dass ein Auseinanderbauen des Bündels nach Einsatz und nach einer Temperaturbehandlung möglich ist, ohne die Zelle zu zerstören. Diese Tatsache erlaubt vorteilhafterweise das Reparieren des Bündels, was bei den Anordnungen des Standes der Technik nicht möglich war.

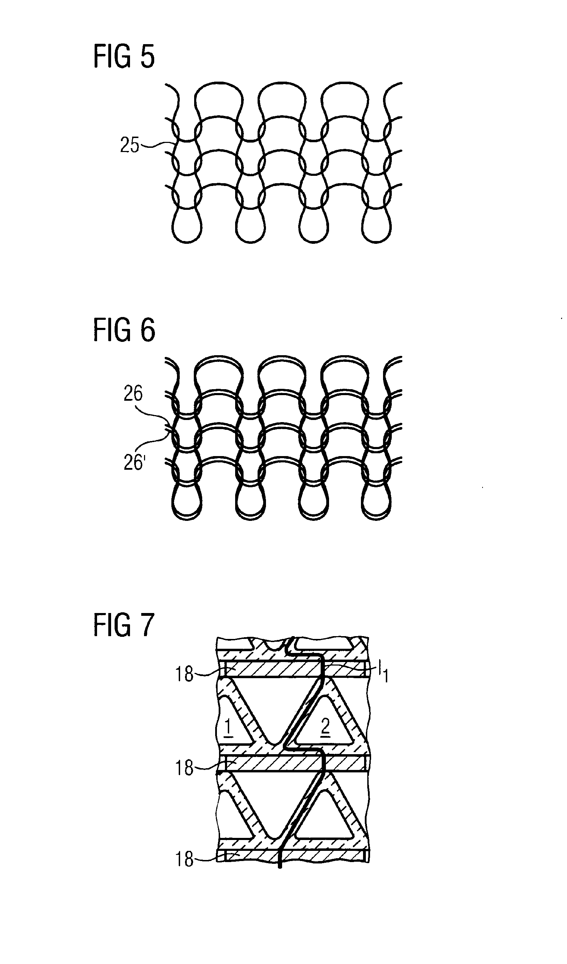

In den Schnittdarstellungen der Figuren 1 bis 4 ist eine einzelne Windung als Einzeldraht dargestellt. In der Praxis können solche Anordnungen aus Gebilden entsprechend den Figuren 5 und 6 ausgebildet sein. Dabei sind die Hohlschnüre entweder gemäß Figur 5 mit einem Draht 25 oder gemäß Figur 6 mit zwei Drähten 26, 26' einlagig, zweilagig oder auch mehrlagig zu flexiblen Gebilden mit Querschnitten von der Größenordnung 2 bis 50 mm gestrickt werden.

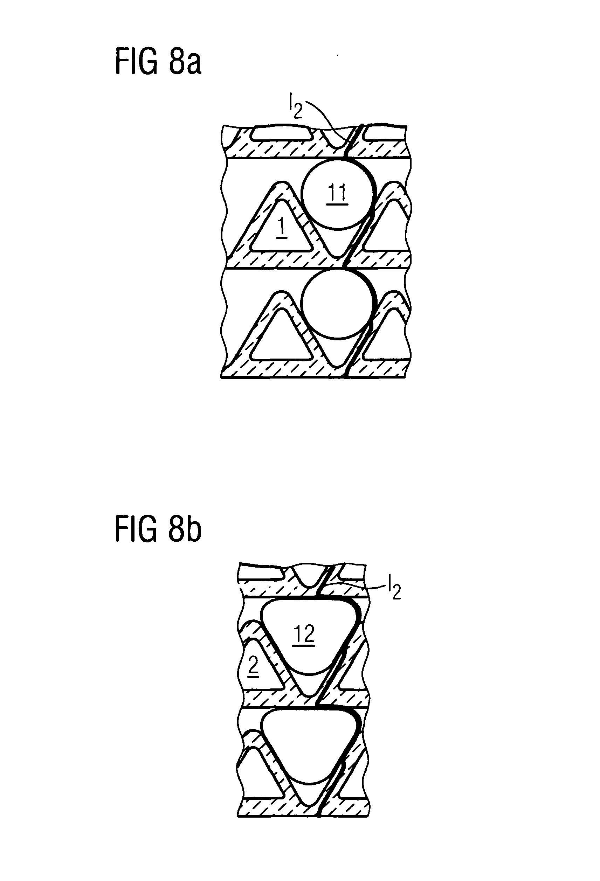

Anhand der Figuren 7 sowie 8a, 8b wird dargestellt, wie bei zwei aufeinander liegenden HPD-Brennstoffzellen mit unterschiedlichen Kontaktierungen der Stromverlauf erfolgt. Dabei sind die Brennstoffzellen ohne Funktionsschichten dargestellt. Sofern gemäß Figur 7 bei der Δ-Zelle zur Kontaktierung nach dem vom Stand der Technik bekannten Weise ein Kontaktelement 18 aus einem Nickel-Schaummaterial verwendet wird, verläuft der Strom I₁ in der Flanke der Δ-Zelle über den gesamten Weg und geht dann über den Nickelschaum 17 zur nächsten Brennstoffzelle.

In den Beispielen gemäß den Figuren 8a bzw. 8b sind Hohlschnüre mit alternativ rundem bzw. dreieckigem Querschnitt als Kontaktierungen verwendet. Im Gegensatz zu Figur 7 verläuft dadurch der Strom I₂ von der ersten Δ-Zelle ohne das Kontaktelement über einen Teil der metallischen Hohlschnur direkt zur nächsten Δ-Zelle, wodurch der elektrische Gesamtwiderstand dieser Anordnungen erheblich erniedrigt wird.

Aus den beiden Teilfiguren 8a und 8b ist weiterhin deutlich erkennbar, dass bei Verwendung der Hohlschnüre entsprechend der Erfindung der Strompfad für I₂ in der Anodenfläche einer einzelnen Δ-Zelle kürzer ist als der Strompfad für I₁: Wie oben bereits erwähnt wird der Strom I₂ unmittelbar von der Hohlschnur übernommen und von dort bis zum Interkonnektor der nächsten Brennstoffzellenlage geführt. Bei Ausbildung der Rundschlauchgebilde mit Dreiecksquerschnitt liegt im Wesentlichen der gleiche Sachverhalt vor, wobei sich hier ein größerer Bereich von Anodenfläche mit darauf liegender Kontaktierungsschicht ergibt.

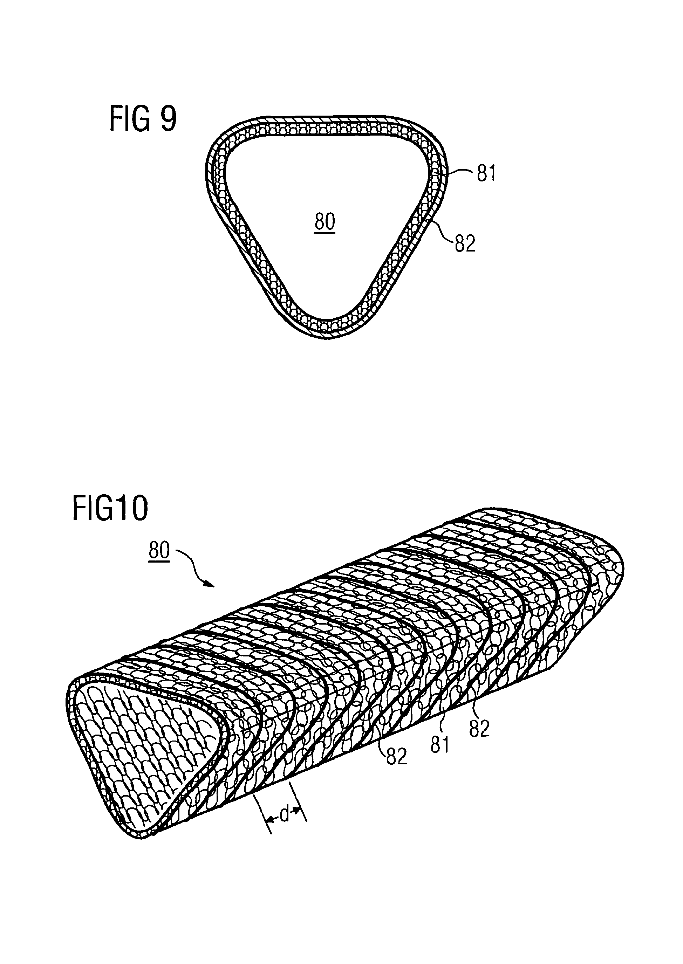

In der Figur 9 ist ein Schnitt durch eine solche Hohlschnur-Anordnung 80 dargestellt, die einerseits einen im Wesentlichen dreiecksförmigen Querschnitt hat und andererseits aus zwei separaten formschlüssig aneinandergefügten Hohlschnurlagen 81, 82 besteht. Die innere Lage 81 wird durch einen Drahtgestrick-Schlauch als erste Hohlschnur entsprechend den vorstehend beschriebenen Ausbildungen gebildet und sorgt für die Bereitstellung der für den bestimmungsgemäßen Gebrauch erforderlichen Elastizität. Auf dieser Drahtgestrick-Hohlschnur 81 ist als äußere Lage eine Drahtschlinge bzw. Spirale 82 aufgebracht, die - wie oben im Einzelnen definiert wurdeals fortlaufende Spirale ebenfalls für sich eine Hohlschnur realisiert. Diese äußere Hohlschnur 82 mit kompakten Drahtoberflächen sorgt dabei für die Erfüllung der elektrischen Anforderungen.

Figur 10 zeigt eine perspektivische Darstellung der Hohlschnur-Anordnung 80 aus Figur 9. In diesem Fall ist ein schlauchartiges Gestrick von einer spiralartigen Wicklung umgeben. Aus der Figur 10 ergibt sich ein Abstand ("Laufweite" der Spirale) von etwa dem Zehnfachen des Drahtdurchmessers des Gestricks, beispielsweise etwa d = 1 mm. Der Abstand kann gegebenenfalls bis zu etwa 10 mm betragen. Dieser Abstand minimiert den Nickelverbrauch, sorgt aber für eine hinreichende Kontaktierung zur Brennstoffzelle.

Elektrische Messungen an unterschiedlich ausgebildeten Anordnungen gemäß den Figuren 1, 2 und 8 sowie 9, 10 ergaben erhebliche Verbesserungen der Kontaktierung und insbesondere einen geringeren Wert von Spannungsverlusten, wobei als spezifische Leitfähigkeit für Nickel 11,5*10⁶ S/m und für Kupfer 57*10⁶ S/m vorausgesetzt wurde. Damit können die sich in der Praxis als vorteilhaft erwiesenen HPD-Brennstoffzellen mit Δ-Struktur in verbesserter Weise zu einem Bündel ("Bundle") einer kompletten Brennstoffzellen-Anlage kombiniert werden.

## Patentansprüche

1. Brennstoffzellen-Anlage aus Hochtemperatur-HPD-Brennstoffzellen mit festkeramischem Elektrolyten (SOFC), wobei die einzelnen HPD-Brennstoffzellen aus mehreren triangelförmig ausgebildeten und fest verbundenen Hohlstrukturen aufgebaut sind, die durch flexible Kontaktanordnungen miteinander verbunden sind, **dadurch gekennzeichnet, dass** die Kontaktanordnungen wenigstens aus jeweils einer Hohlschnur (11, 11', ...; 12, 12', ...; 80) bestehen, wobei die Hohlschnur (11, 11' , ...; 12, 12', ...; 80) wenigstens drei Auflageflächen zu benachbarten HPD-Brennstoffzellen (10, 10', ...) haben.

2. Brennstoffzellen-Anlage nach Anspruch 1, **dadurch gekennzeichnet, dass** die Hohlschnur (11, 11', ...; 12, 12', ...) aus einem Drahtgestrick mit Innenlumen besteht.

3. Brennstoffzellen-Anlage nach Anspruch 1, **dadurch gekennzeichnet, dass** die Hohlschnur (11, 11', ...; 12, 12', ...) aus einer Drahtspirale besteht.

4. Brennstoffzellen-Anlage nach Anspruch 1, **dadurch gekennzeichnet, dass** die Hohlschnur (80) aus einer inneren Lage (81) mit Drahtgestrick und Innenlumen sowie einer äußeren Lage mit Drahtspirale (82) als Schlinge besteht.

5. Brennstoffzellen-Anlage nach einem der vorhergehenden Ansprüche, **dadurch gekennzeichnet, dass** die Hohlschnur (11, 11', ...) einen runden Querschnitt hat.

6. Brennstoffzellen-Anlage nach einem der Ansprüche 1 bis 4, **dadurch gekennzeichnet, dass** die Hohlschnur (12, 12', ...) einen dreiecksförmigen Querschnitt mit abgerundeten Ecken aufweist.

7. Brennstoffzellen-Anlage nach Anspruch 5 oder Anspruch 6, **dadurch gekennzeichnet, dass** zwischen der Drahtspirale und den Auflageflächen an den Brennstoffzellen kontaktherstellende Elemente (13a, 13b; 20a, 20b) angeordnet sind.

8. Brennstoffzellen-Anlage nach Anspruch 7, **dadurch gekennzeichnet, dass** die kontaktherstellenden Elemente Metallstrukturen (13a, 13b) nach Art eines Klettverschlusses sind.

9. Brennstoffzellen-Anlage nach Anspruch 7, **dadurch gekennzeichnet, dass** die kontaktherstellenden Elemente leitfähige doppelseitig klebende Bänder (20a, 20b) auf Metallbasis) sind.

10. Brennstoffzellen-Anlage nach Anspruch 1, **dadurch gekennzeichnet, dass** die Hohlschnur (11, 11'; ...; 12, 12', ...) aus einem schlauchartigen Drahtgestrick besteht.

11. Brennstoffzellen-Anlage nach Anspruch 7, **dadurch gekennzeichnet, dass** das Drahtgestrick aus einem einzelnen Draht (25) gestrickt ist.

12. Brennstoffzellen-Anlage nach Anspruch 7, **dadurch gekennzeichnet, dass** das Drahtgestrick aus zwei parallel laufenden oder mehreren Drähten (26, 26') gestrickt ist.

13. Brennstoffzellen-Anlage nach Anspruch 11 oder Anspruch 12, **dadurch gekennzeichnet, dass** die Hohlschnur (11, 11'; ...; 12, 12', ...) aus einem einlagigen Drahtgestrick besteht.

14. Brennstoffzellen-Anlage nach Anspruch 11 oder Anspruch 12, **dadurch gekennzeichnet, dass** die Hohlschnur (11, 11'; ...; 12, 12', ...) aus zwei- oder mehrlagigen Drahtgestricken besteht.

15. Brennstoffzellen-Anlage nach einem der vorhergehenden Ansprüche, **dadurch gekennzeichnet, dass** die elektrische Leitfähigkeit der Hohlschnur-Drahtgestricke (11, 11', ...; 12, 12', ...) > 10⁵ S/m ist.

16. Brennstoffzellen-Anlage nach einem der Ansprüche 1 bis 9, **dadurch gekennzeichnet, dass** das Material für die Hohlschnur-Drahtgestricke Nickel (Ni), Kupfer (Cu) oder deren Legierungen ist.

17. Brennstoffzellen-Anlage nach einem der vorhergehenden Ansprüche, **dadurch gekennzeichnet, dass** die Hohlschnur (11, 11', ...; 12, 12', ..., 80) einen Durchmesser von 2 bis 50 mm hat.

18. Brennstoffzellen-Anlage nach einem der vorhergehenden Ansprüche, **dadurch gekennzeichnet, dass** die Metalldrähte für die Hohlschnur (11, 11'; 12, 12', ...) einen Durchmesser von 0,05 bis 0,5 mm haben.

19. Brennstoffzellen-Anlage nach einem der vorhergehenden Ansprüche, **dadurch gekennzeichnet, dass** die Hohlschnur (80) aus einem schlauchartigen Gestrick (81) und einer um das Gestrick (81) spiralartig herumlaufende Drahtschlaufe/-schlinge (82) oder aus einer singulären Drahtspirale (82) besteht.

20. Brennstoffzellenanlage nach Anspruch 19, **dadurch gekennzeichnet, dass** der Abstand (d) der spiralartigen Drahtschlaufe/-schlinge (82) etwa 1 mm beträgt.

21. Brennstoffzellen-Anlage nach einem der vorhergehenden Ansprüche, **dadurch gekennzeichnet, dass** die Hohlschnüre (11, 11'; 12, 12', ...) bei dem Brennstoffzellenbündel als eine Vibrations-Isolierung eingesetzt werden.

22. Verfahren zur Herstellung einer Brennstoffzellen-Anlage aus Hochtemperatur-HPD-Brennstoffzellen mit festkeramischem Elektrolyten (SOFC), wobei die einzelnen HPD-Brennstoffzellen aus mehreren triangelförmig ausgebildeten und fest verbundenen Hohlstrukturen aufgebaut sind, die durch flexible Kontaktanordnungen miteinander verbunden sind, nach Anspruch 1 oder einem der Ansprüche 2 bis 20, wobei einzelne Brennstoffzellen (10, 10', ...) durch Hohlschnüre (11, 11' ; 12, 12', ...) kontaktiert und zu einem Brennstoffzellenbündel aufgebaut werden, **dadurch gekennzeichnet, dass** beim Aufbau einzelner Brennstoffzellenbündel ein "in situ"-Sintern erfolgt.

23. Herstellungsverfahren nach Anspruch 22, **dadurch gekennzeichnet, dass** nach dem Aufbau bei den einzelnen Brennstoffzellenbündeln bei Bedarf ein zerstörungsfreies Auseinanderbauen erfolgt, insbesondere für Reparaturzwecke.

24. Herstellungsverfahren nach Anspruch 22, **dadurch gekennzeichnet, dass** die Hohlschnüre (11, 11', ...) aus metallischen Drahtgestricken gefertigt werden, wobei deren elektrische Leitfähigkeit > 10⁵ S/m ist.

25. Herstellungsverfahren nach Anspruch 22, **dadurch gekennzeichnet, dass** als Material für das Hohlschnur-Drahtgestrick Nickel (Ni), Kupfer (Cu) oder deren Legierungen verwendet werden.

## Claims

1. Fuel cell system made up of high-temperature HPD fuel cells with solid ceramic electrolytes (SOFC), the individual HPD fuel cells being constructed from a number of hollow structures configured as triangular and being connected solidly, said hollow structures being connected to one another by flexible contact arrangements, **characterised in that** the contact arrangements in each instance consist at least of a hollow cord (11, 11', ...; 12, 12', ...; 80), the hollow cord (11, 11', ...; 12, 12', ...; 80) having at least three contact surfaces with adjacent HPD fuel cells (10, 10', ...).

2. Fuel cell system according to claim 1, **characterised in that** the hollow cord (11, 11' , ...; 12, 12', ...) consists of knitted wire fabric with an inner lumen.

3. Fuel cell system according to claim 1, **characterised in that** the hollow cord (11, 11' , ...; 12, 12', ...) consists of a wire spiral.

4. Fuel cell system according to claim 1, **characterised in that** the hollow cord (80) consists of an inner layer (81) with knitted wire fabric and an inner lumen and an outer layer with a wire spiral (82) in the manner of a loop.

5. Fuel cell system according to one of the preceding claims, **characterised in that** the hollow cord (11, 11', ...) has a round cross section.

6. Fuel cell system according to one of claims 1 to 4, **characterised in that** the hollow cord (12, 12', ...) has a triangular cross section with rounded corners.

7. Fuel cell system according to claim 5 or claim 6, **characterised in that** elements (13a, 13b; 20a, 20b) to establish contact are disposed on the fuel cells between the wire spiral and the contact surfaces.

8. Fuel cell system according to claim 7, **characterised in that** the elements to establish contact are metal structures (13a, 13b) in the manner of a Velcro fastening.

9. Fuel cell system according to claim 7, **characterised in that** the elements to establish contact are conductive double-sided adhesive tapes (20a, 20b) with a metal base.

10. Fuel cell system according to claim 1, **characterised in that** the hollow cord (11, 11' , ...; 12, 12', ...) consists of knitted wire fabric in the manner of a hose.

11. Fuel cell system according to claim 7, **characterised in that** the knitted wire fabric is knitted from a single wire (25).

12. Fuel cell system according to claim 7, **characterised in that** the knitted wire fabric is knitted from two parallel or a number of wires (26, 26').

13. Fuel cell system according to claim 11 or claim 12, **characterised in that** the hollow cord (11, 11' , ...; 12, 12', ...) consists of a single layer knitted wire fabric.

14. Fuel cell system according to claim 11 or claim 12, **characterised in that** the hollow cord (11, 11' , ...; 12, 12', ...) consists of two-layer or multilayer knitted wire fabrics.

15. Fuel cell system according to one of the preceding claims, **characterised in that** the electrical conductivity of the hollow cord knitted wire fabrics (11, 11', ...; 12, 12', ...) is > 10⁵ S/m.

16. Fuel cell system according to one of claims 1 to 9, **characterised in that** the material for the hollow cord knitted wire fabric is nickel (Ni), copper (Cu) or their alloys.

17. Fuel cell system according to one of the preceding claims, **characterised in that** the hollow cord (11, 11', ...; 12, 12', ..., 80) has a diameter of 2 to 50 mm.

18. Fuel cell system according to one of the preceding claims, **characterised in that** the metal wires for the hollow cord (11, 11' , ...; 12, 12', ...) have a diameter of 0.05 to 0.5 mm.

19. Fuel cell system according to one of the preceding claims, **characterised in that** the hollow cord (80) consists of a hose-type knitted fabric (81) and a wire sling/loop (82) running in a spiral manner round the knitted fabric (81) or consists of a singular wire spiral (82).

20. Fuel cell system according to claim 19, **characterised in that** the distance (d) to the spiral-type wire sling/loop (82) is around 1 mm.

21. Fuel cell system according to one of the preceding claims, **characterised in that** the hollow cords (11, 11', ...; 12, 12', ...) are used as vibration insulation in the fuel cell bundle.

22. Method for producing a fuel cell system made up of high-temperature HPD fuel cells with solid ceramic electrolytes (SOFC), the individual HPD fuel cells being constructed from a number of hollow structures configured as triangular and being connected solidly, said hollow structures being connected to one another by flexible contact arrangements, according to claim 1 or one of claims 2 to 20, with individual fuel cells (10, 10', ...) being contacted by hollow cords (11, 11' , ...; 12, 12', ...) and being formed into a fuel cell bundle, **characterised in that** in situ sintering takes place when individual fuel cell bundles are constructed.

23. Production method according to claim 22, **characterised in that** after construction non-destructive disassembly takes place, particularly for repair purposes, as required in the individual fuel cell bundles.

24. Production method according to claim 22, **characterised in that** the hollow cords (11, 11', ...) are manufactured from metallic knitted wire fabrics, their electrical conductivity being > 10⁵ S/m.

25. Production method according to claim 22, **characterised in that** nickel (Ni), copper (Cu) or their alloys are used as the material for the hollow cord knitted wire fabric.

## Revendications

1. Système de piles à combustible composé de piles à combustible HPD à haute température à électrolyte de céramique solide (SOFC), les différentes piles à combustible HPD étant constituées de plusieurs structures creuses réalisées en forme de triangle et solidaires qui sont reliées entre elles par des dispositifs de contact flexibles, **caractérisé en ce que** lesdits dispositifs de contact flexibles sont composés chacun d'au moins un cordon creux (11, 11' , ... ; 12, 12', ... ; 80), ledit cordon creux (11, 11', ... ; 12, 12', ... ; 80) ayant au moins trois surfaces d'appui vers des piles à combustible HPD voisines (10, 10', ...).

2. Système de piles à combustible selon la revendication 1, **caractérisé en ce que** le cordon creux (11, 11', ... ; 12, 12', ...) est composé d'un tricot de fil métallique à lumière interne.

3. Système de piles à combustible selon la revendication 1, **caractérisé en ce que** le cordon creux (11, 11', ... ; 12, 12', ...) est composé d'une spirale de fil métallique.

4. Système de piles à combustible selon la revendication 1, **caractérisé en ce que** le cordon creux (80) est composé d'une couche intérieure (81) à tricot de fil métallique et lumière interne ainsi que d'une couche extérieure à spirale de fil métallique (82) comme boucle.

5. Système de piles à combustible selon l'une des revendications précédentes, **caractérisé en ce que** le cordon creux (11, 11', ...) a une section ronde.

6. Système de piles à combustible selon l'une des revendications 1 à 4, **caractérisé en ce que** le cordon creux (12, 12', ...) a une section de forme triangulaire à angles arrondis.

7. Système de piles à combustible selon la revendication 5 ou la revendication 6, **caractérisé en ce que** des éléments de mise en contact (13a, 13b ; 20a, 20b) sont disposés entre la spirale de fil métallique et les surfaces d'appui sur les piles à combustible.

8. Système de piles à combustible selon la revendication 7, **caractérisé en ce que** lesdits éléments de mise en contact sont des structures métalliques (13a, 13b) de type fermeture autoagrippante.

9. Système de piles à combustible selon la revendication 7, **caractérisé en ce que** lesdits éléments de mise en contact sont des bandes adhésives double face conductrices (20a, 20b) à base de métal.

10. Système de piles à combustible selon la revendication 1, **caractérisé en ce que** le cordon creux (11, 11', ... ; 12, 12', ...) est composé d'un tricot de fil métallique en forme de tuyau flexible.

11. Système de piles à combustible selon la revendication 7, **caractérisé en ce que** le tricot de fil métallique est tricoté à partir d'un seul fil métallique (25).

12. Système de piles à combustible selon la revendication 7, **caractérisé en ce que** le tricot de fil métallique est tricoté à partir de deux fils métalliques parallèles ou plusieurs (26, 26').

13. Système de piles à combustible selon la revendication 11 ou la revendication 12, **caractérisé en ce que** le cordon creux (11, 11', ... ; 12, 12', ...) est composé d'un tricot de fil métallique à une couche.

14. Système de piles à combustible selon la revendication 11 ou la revendication 12, **caractérisé en ce que** le cordon creux (11, 11' , ... ; 12, 12', ...) est composé de tricots de fil métallique à deux ou plusieurs couches.

15. Système de piles à combustible selon l'une des revendications précédentes, **caractérisé en ce que** la conductivité électrique des tricots de fil métallique du cordon creux (11, 11' , ... ; 12, 12', ...) est supérieure à 10⁵ S/m.

16. Système de piles à combustible selon l'une des revendications 1 à 9, **caractérisé en ce que** le matériau utilisé pour les tricots de fil métallique du cordon creux est le nickel (Ni), le cuivre (Cu) ou des alliages de ceux-ci.

17. Système de piles à combustible selon l'une des revendications précédentes, **caractérisé en ce que** le cordon creux (11, 11', ... ; 12, 12', ... ; 80) a un diamètre compris entre 2 et 50 mm.

18. Système de piles à combustible selon l'une des revendications précédentes, **caractérisé en ce que** les fils métalliques utilisés pour le cordon creux (11, 11' ; 12, 12', ...) ont un diamètre compris entre 0,05 et 0,5 mm.

19. Système de piles à combustible selon l'une des revendications précédentes, **caractérisé en ce que** le cordon creux (80) est composé d'un tricot (81) en forme de tuyau flexible et d'une boucle de fil métallique (82) s'enroulant à la manière d'une spirale autour du tricot (81), ou d'une spirale de fil métallique singulière (82).

20. Système de piles à combustible selon la revendication 19, **caractérisé en ce que** l'écartement (d) de la boucle de fil métallique (82) de type spirale est d'environ 1 mm.

21. Système de piles à combustible selon l'une des revendications précédentes, **caractérisé en ce que** les cordons creux (11, 11' ; 12, 12', ...) sont utilisés dans le faisceau de piles à combustible comme une isolation antivibratoire.

22. Procédé de fabrication d'un système de piles à combustible composé de piles à combustible HPD à haute température à électrolyte de céramique solide (SOFC), les différentes piles à combustible HPD étant constituées de plusieurs structures creuses réalisées en forme de triangle et solidaires qui sont reliées entre elles par des dispositifs de contact flexibles, selon la revendication 1 ou l'une des revendications 2 à 20, dans lequel des piles à combustibles individuelles (10, 10', ...) sont mises en contact par des cordons creux (11, 11' ; 12, 12', ...) et montés ensemble pour former un faisceau de piles à combustible, **caractérisé en ce qu'**au cours du montage de faisceaux de piles à combustible individuels on effectue un frittage in situ .

23. Procédé de fabrication selon la revendication 22, **caractérisé en ce qu'**après le montage on effectue sur les faisceaux de piles à combustible individuels en cas de besoin un démontage non destructif, notamment à des fins de réparation.

24. Procédé de fabrication selon la revendication 22, **caractérisé en ce que** l'on réalise les cordons creux (11, 11', ...) à partir de tricots de fil métallique, leur conductivité électrique étant supérieure à 10⁵ S/m.

25. Procédé de fabrication selon la revendication 22, **caractérisé en ce que** l'on utilise comme matériau pour le tricot de fil métallique du cordon creux le nickel (Ni), le cuivre (Cu) ou des alliages de ceux-ci.
